# EUROPÄISCHE PATENTANMELDUNG

(11) **EP 2 136 071 A2**
(43) Veröffentlichungstag der Anmeldung: **23.12.2009**
(21) Anmeldenummer: 09007651.4
(22) Anmeldetag: 10.06.2009
(51) Int. Cl.: F02N 11/08

(54) **Kraftfahrzeug**

(30) Priorität: 20.06.2008 DE 102008029347
(71) Anmelder: Audi AG, 85045 Ingolstadt (DE)
(72) Erfinder: Schmidt, Jörg, Dr., 85057 Ingolstadt (DE); Pfaller, Stefan, 85131 Weigersdorf (DE)
(74) Vertreter: Thielmann, Frank

(57) **Zusammenfassung**

Kraftfahrzeug umfassend einen Motor und einen diesen startenden Anlasser zur Realisierung eines Start-Stopp-Betriebs, wobei der Anlasser den ausgeschalteten Motor nach Gabe eines Einschaltsignals durch den Fahrer anlässt, wobei eine Einrichtung (6) zur Erfassung einer anstehenden oder erfolgten Änderung der Ursache für den Stopp des Kraftfahrzeugs (1) vorgesehen ist, die zur Gabe einer das in Kürze zu erwartende Einschaltsignal anzeigenden Information auf wenigstens einen Fahrzeugbus (8, 8a, 8b, 8c, 8d) zur Verteilung an weitere fahrzeugseitig vorgesehene Elektronikeinheiten (9, 18), insbesondere Steuergeräte, ausgebildet ist.

## Beschreibung

Die Erfindung betrifft ein Kraftfahrzeug umfassend einen Motor und einen diesen startenden Anlasser zur Realisierung eines Start-Stopp-Betriebs, wobei der Anlasser den ausgeschalteten Motor nach Gabe eines Einschaltsignals durch den Fahrer anlässt.

Ein Fahrzeug muss im üblichen Betrieb, insbesondere bei einer Stadtfahrt, relativ häufig anhalten, wobei als Ursache für den Stopp des Fahrzeugs vornehmlich Ampeln zu nennen sind, jedoch mitunter auch Bahnübergänge, Stauenden oder dergleichen zum Anhalten zwingen. Üblicherweise läuft der Motor auch während des Stopps, was während dieser Zeit zwangsläufig zu einem Kraftstoffverbrauch und zur Abgabe von Emissionen führt. Um dem zu begegnen sind Kraftfahrzeuge bekannt, die einen Anlasser aufweisen, über den der Motor bei Gabe eines Einschaltsignals automatisch angelassen werden kann, ohne dass der Fahrer hierfür den Zündschlüssel aktiv bewegen muss. Hierüber kann ein sogenannter Start-Stopp-Betrieb des Fahrzeugs realisiert werden, bei dem das Fahrzeug bei einem Stopp beispielsweise an einer Ampel automatisch ausgeschaltet wird und über den Anlasser automatisch wieder angelassen wird, wenn eine Weiterfahrt erwünscht ist. Hierbei muss sichergestellt werden, dass rechtzeitig erkannt wird, dass der Fahrer das Weiterfahren wünscht. In der Regel wird dies durch Betätigen der Kupplung und das Einlegen eines Ganges bei Fahrzeugen mit Schaltgetriebe erkannt, oder durch Betätigen des Gaspedals bei Fahrzeugen mit Automatikgetriebe, wobei natürlich auch andere Möglichkeiten zur Gabe des Einschaltsignals, aufgrund dessen der Anlasser den Motor wieder anlässt, denkbar sind. Der Fahrer erwartet dabei eine sofort Reaktion des Fahrzeugs, da er anfahren möchte, nachdem sich beispielsweise die vor ihm befindlichen Fahrzeuge bereits in Bewegung gesetzt haben. Jedoch muss zunächst der Motor für die Anfahrt gestartet werden.

Zwar besteht mit derartigen Kraftfahrzeugen grundsätzlich die Möglichkeit einer Verbrauchs- und Emissionsreduzierung, jedoch sind damit auch Nachteile verbunden. Denn der Motorstart über den Anlasser führt auch bei einem Warmstarf zu einem erheblichen Spannungseinbruch auf dem gesamten Bordnetz, d. h., dass die Netzspannung kurzzeitig reduziert wird. Ein Teil des Bordnetzes kann durch Einsatz entsprechender Wandler gestützt werden. Der Teil des Bordnetzes respektive der angeschlossenen Verbraucher, der nicht gestützt werden kann, muss zumindest über den zu erwartenden Spannungseinbruch informiert werden, um Fehlverhalten innerhalb der angeschlossenen Systeme als Folge des Spannungseinbruchs, die sich nachteilig auf den Fahrbetrieb auswirken können bzw. den Fahrer stören können, sowie Fehldiagnosen der Elektronik zu unterdrücken. Das Motormanagement, also das Motorsteuergerät, kann hierzu über die vorhandenen Fahrzeugbusse die Steuergeräte über den zu erwartenden Start informieren. Hieraus resultiert jedoch ein zeitlicher Konflikt zwischen der Schnelligkeit der Übertragung und Verarbeitung dieser Wiederstartinformation einerseits und dem schnellen Start des Motors andererseits, damit der Fahrer diese künstliche Verzögerung nicht bemerkt. D. h., dass zwischen Gabe des Einschaltsignals (z. B. Betätigen des Fahrpedals) und dem tatsächlichen Motorstart eine gewisse Verzögerungszeit zwingend vorgesehen ist, damit das Bordnetz gestützt respektive die Wiederstartinformation übertragen und seitens der eingebundenen Systeme respektive Steuergeräte verarbeitet und Maßnahmen ergriffen werden können. Wenngleich diese künstliche Verzögerungszeit relativ kurz ist, ist sie dennoch gegeben und wirkt sich insgesamt auf einen zügigen Anlassbetrieb nachteilig aus.

Der Erfindung liegt damit das Problem zugrunde, ein Kraftfahrzeug anzugeben, das einen schnelleren Wiederstart durch den Anlasser nach Gabe des Einschaltsignals ermöglicht.

Zur Lösung dieses Problems ist erfindungsgemäß eine Einrichtung zur Erfassung einer anstehenden oder erfolgten Änderung der Ursache für den Stopp des Kraftfahrzeugs vorgesehen, die zur Gabe einer das in Kürze zu erwartende Einschaltsignal anzeigenden Information auf wenigstens einen Fahrzeugbus zur Verteilung an weitere fahrzeugseitig vorgesehene Elektronikeinheiten, insbesondere Steuergeräte, ausgebildet ist.

Das erfindungsgemäße Kraftfahrzeug ist über die vorgesehene Erfassungseinrichtung in der Lage, aktiv die in Kürze anstehende oder bereits erfolgte Änderung der Ursache für den Halt des Kraftfahrzeugs zu erfassen, also bereits sehr frühzeitig zu erkennen, dass in Kürze mit einer Wiederanfahrt aufgrund der Änderung der Stopp-Ursache zu rechnen ist. D. h., dass fahrzeugseitig bereits lange vor der eigentlichen Gabe des Einschaltsignals eine Wiederanfahrinformation vorliegt bzw. generiert wurde. Diese Information, die letztlich das in Kürze zu erwartende Einschaltsignal anzeigt, wird von der Einrichtung auf wenigstens einen Fahrzeugbus, gegebenenfalls auch auf mehrere Fahrzeugbusse gegeben, um sie so an weitere fahrzeugseitig vorgesehene Elektronikeinheiten, die allesamt unter einem Spannungseinbruch im Wiederstartfall leiden würden und über Wandler oder dergleichen entweder gestützt werden müssen oder in jedem Fall über den zu erwartenden Spannungseinbruch informiert werden müssen, zu verteilen. D. h., dass die "Vorbereitung" oder "Warnung" des Bordnetzes bzw. der Elektronikkomponenten über den zu erwartenden Spannungsabfall bereits zu einem Zeitpunkt erfolgen kann, zu dem das Einschaltsignal vom Fahrer noch nicht gegeben wurde. Gleichwohl kann das Fahrzeug jedoch auf den in Kürze anstehenden Wiederstart "vorbereitet" werden. Die eingebundenen Elektronikkomponenten können ihrerseits entsprechende Maßnahmen ergreifen, um den anstehenden Spannungseinbruch zu kompensieren respektive diesen nicht als kritisch zu erkennen und zu unterdrücken, etc.

Für den Betrieb des Kraftfahrzeugs bedeutet diese quasi vorgelagerte Gabe der anstehenden Wiederanfahr-Information einen beachtlichen Zeitgewinn im Wiederanlassfall. Denn die bis dato künstlich zwischengeschaltete Verzögerungszeit zwischen der Gabe des Einschaltsignals und dem tatsächlichen Wiederstart, innerhalb welcher Verzögerungszeit über das Motorsteuergerät oder dergleichen erst die entsprechende Anlassinformation an die einzelnen Subsysteme gegeben werden, damit diese über den anstehenden Spannungseinbrüchen informiert werden, entfällt erfindungsgemäß, nachdem die "Bordnetzvorbereitung" bei Gabe des Einschaltsignals bereits erfolgt ist. Mit Gabe des Einschaltsignals kann infolgedessen sofort der Anlasser den Motor wieder anlassen, so dass der Fahrer, der das Einschaltsignal gegeben hat, eine unmittelbare Reaktion seitens des Fahrzeugs erfährt.

Die Erfassung der Stopp-Ursache respektive der anstehenden oder gegebenen Änderung der Stopp-Ursache, die dann zu einer Wiederanfahrt führt, kann auf unterschiedliche Weise erfolgen. Nach einer ersten Erfindungsalternative kann die Einrichtung zur Erfassung der Stopp-Ursache eine Funkeinrichtung zur Aufnahme drahtlos von einer Verkehrsregelungseinrichtung zugeordneten Funkeinrichtung übertragener Signalsinformationen umfassen. Hier erfolgt also eine Kommunikation zwischen einer fahrzeugseitigen Funkeinrichtung und einer externen Funkeinrichtung, die beispielsweise direkt an einer Ampelanlage oder einem Andreaskreuz oder dergleichen Verkehrsregelungseinrichtung angeordnet ist. Die Stopp-Ursache stellt in diesem Fall die Verkehrsregelungseinrichtung dar. Deren Funkeinrichtung - als solche kann ein einfacher Sender dienen - überträgt entweder kurz vor der Änderung der Lichtzeichen die Signalinformation betreffend die anstehende Änderung, oder unmittelbar mit Änderung der Lichtzeichen. Diese Signalinformation wird sodann unmittelbar über die fahrzeugseitige Funkeinrichtung - hierbei kann es sich um einen einfachen Empfänger handeln - erfasst und seitens der Einrichtung zur Erzeugung der "vorbereitenden" Wiederanfahr-Information, die auf den oder die Fahrzeugbusse gelegt wird, verarbeitet. Die eingebundenen Elektronikkomponenten erhalten diese WiederstartInformation folglich deutlich früher als bisher, und auch vor der Gabe des Einschaltsignals. Gemäß dieser Erfindungsausgestaltung erfolgt also eine unmittelbare Funkkommunikation zwischen der Verkehrsregelungseinrichtung, also beispielsweise der Ampel, und dem Fahrzeug.

Eine alternative Ausgestaltung oder auch zusätzlich vorgesehene Möglichkeit der Ausbildung der Einrichtung sieht vor, zur Erfassung der Stopp-Ursache eine Bildaufnahmeeinrichtung zu verwenden. Diese Bildaufnahme-und- auswerteeinrichtung nimmt reale Bilder der Umgebung auf, ist also im Stande, die Ampelanlage oder dergleichen Verkehrsregelungseinrichtung zu erfassen. Über geeignete Auswertealgorithmen ist diese Einrichtung so dann in der Lage, die angezeigten Lichtsignale zu erkennen. Hierüber kann ein Lichtzeichenwechsel sofort erkannt werden, und zwar üblicherweise früher als ihn der Fahrer, der auch gegebenenfalls gerade nicht auf die Ampelanlage sieht, dies erkennt. Mit der Erfassung eines Wechsels der Ampelsignale geht unmittelbar wiederum die Gabe der Wiederanfahr-Information über den oder die Fahrzeugbusse an die eingebundenen Elektronikkomponenten einher, die auch in diesem Fall frühzeitig und deutlich vor der Gabe des eigentlichen Einschaltsignals durch den Fahrer informiert und "vorbereitet" werden.

Insbesondere die, gegebenenfalls zusätzlich zur Funkeinrichtung, vorgesehene Verwendung der Bildaufnahmeeinrichtung bietet die Möglichkeit, auch die Wiederanfahrt einer Kolonne automatisch und frühzeitig zu erkennen. Eine solche Kolonne kann sich auch vor einer Ampelanlage bilden, oder auf Autobahnen oder dergleichen. Die Bildaufnahmeeinrichtung erfasst in der Regel auch das unmittelbar vor dem eigenen Fahrzeug stehende Fahrzeuge und gegebenenfalls noch weitere davor befindliche Fahrzeuge. Durch geeignete Auswertealgorithmen ist es nun möglich, anhand der kontinuierlich aufgenommenen Bilder zu erkennen, ob sich eines oder mehrere der vor dem eigenen Fahrzeug befindlichen Fahrzeuge, spätestens jedoch das unmittelbar davor befindliche Fahrzeug, in Bewegung setzt. Sobald dies erkannt wird, kann das Wiederanfahr-Signal erzeugt und über den oder die Fahrzeugbusse verteilt werden, da in allernächster Zeit mit der Gabe des Einschaltsignals und damit der gewünschten Wiederanfahrt zu rechnen ist. Auch diese automatische Erfassung der Ursachenänderung kann unter Umständen vor der Erfassung durch den Fahrer erfolgen, der möglicherweise die Situation in diesem Moment nicht beobachtet und abgelenkt ist.

Eine zweckmäßige Weiterbildung der Erfindung sieht vor, dass die Einrichtung nach Ablauf einer vorbestimmten Zeit ohne Gabe des Einschaltsignals zur Erzeugung einer die Information zurücknehmenden weiteren Information und zur Gabe auf den Fahrzeugbus, oder zur Zuordnung einer Gültigkeitsdauerinformation zur Information im Rahmen deren Erzeugung ausgebildet ist. Hierüber wird sichergestellt, dass die Wiederanfahr-Information, die auf den oder die Fahrzeugbusse gegeben wurde und die eingebundenen Elektroniksysteme quasi in einen Standby-Zustand bezüglich der anstehenden Wiederanfahrt respektive den damit verbundenen Spannungseinbruch gesetzt hat, nur eine begrenzte zeitliche Geltungsdauer besitzt. Denn die hieraus resultierende Stützung des Bordnetzes respektive der Wechsel der eingebundenen Elektroniksysteme in einen Modus, in dem der zu erwartende Spannungseinbruch gehändelt werden kann, darf nicht über zu lange Zeit gegeben sein. Dies wird durch die beschriebene Erfindungsausgestaltung sichergestellt, indem entweder nach Ablauf einer vorbestimmten Zeit ohne Gabe des Einschaltsignals die erste Wiederanfahr-Information durch eine zweite Rücknahme-Information wieder zurückgenommen wird, also die Bordnetzstützung quasi wieder aufgehoben wird respektive die eingebundenen Elektroniksysteme wieder in ihren "normalen" Funktionsmodus wechseln. Alternativ ist es auch denkbar, die originär erzeugte erste Wiederanfahr-Information mit einem Zeitstempel zu versehen, also einer Gültigkeitsdauerinformation, die angibt, wie lange diese Information gilt respektive zu berücksichtigen ist. Nach Ablauf der Gültigkeitsdauer ohne Gabe des Einschaltsignal werden die vorgenommenen Änderungen bzw. Einstellungen automatisch wieder zurückgenommen.

Zweckmäßig ist es ferner, wenn die Einrichtung zur Erzeugung und mit der Informationsgabe zeitgleichen Ausgabe einer die anstehende oder erfolgte Änderung der Stopp-Ursache anzeigenden Fahrerinformation ausgebildet ist. Dies ermöglicht eine aktive Information des Fahrers über den anstehenden oder bereits erfolgten Wechsel der Ampelanzeige oder der gleichen, oder die Anfahrt der Kolonne, etc, so dass dieser hierauf gegebenenfalls aufmerksam gemacht wird, wenn er dies nicht von selbst verkannt hat. Diese Information kann optisch beispielsweise über ein entsprechendes Display im Kombiinstrument oder im Bereich des Armaturenbretts gegeben werden, alternativ oder zusätzlich kann auch eine Sprachinformation ausgegeben werden, auch die Gabe eines haptischen Informationssignals über das Lenkrad oder den Sitz oder dergleichen ist denkbar.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung eines erfindungsgemäßen Kraftfahrzeugs, und
- Fig. 2: eine Prinzipdarstellung der Einbindung der erfindungsgemäßen Einrichtung in das Fahrzeugbussystem.

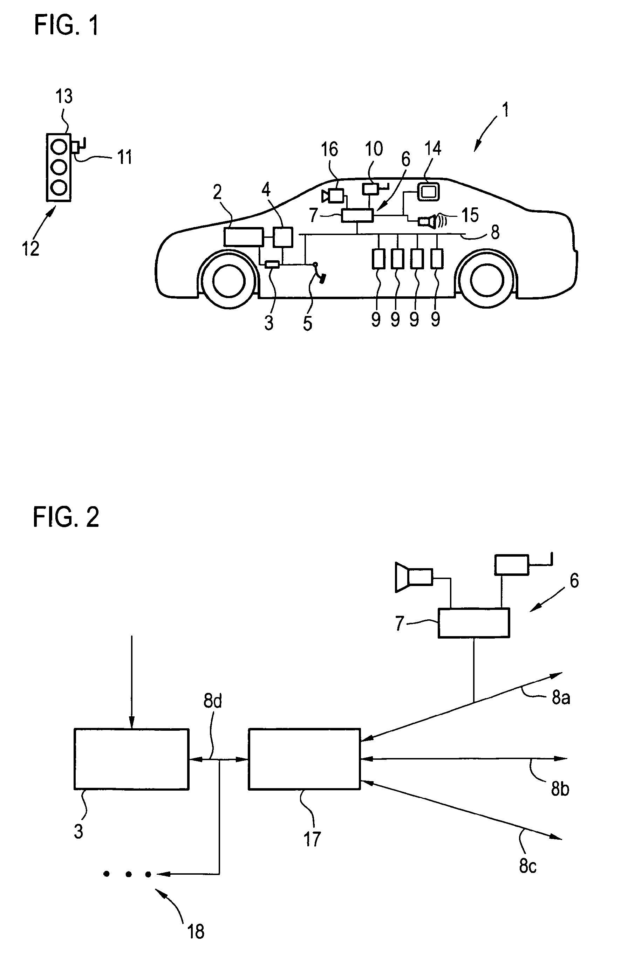

Fig. 1 zeigt ein erfindungsgemäßes Kraftfahrzeug 1 umfassend einen Motor 2 mit zugeordnetem Motorsteuergerät 3 sowie einem zugeordneten Anlasser 4, über den der zuvor ausgeschaltete Motor 2, gesteuert über das Motorsteuergerät 3, aktiv im Rahmen eines Start-Stopp-Betriebs angelassen werden kann. Hierzu dient ein Einschaltsignal, das vom Fahrer im Falle einer gewünschten Wiederanfahrt zu geben ist. Im gezeigten Ausführungsbeispiel wird das Einschaltsignal über das Fahrpedal 5 gegeben, d. h., der Fahrer betätigt das Fahrpedal 5 etwas, woraufhin das Einschaltsignal erzeugt und an das Motorsteuergerät 3 zur Weiterverarbeitung gegeben wird.

Gezeigt ist ferner eine Einrichtung 6 umfassend eine Steuerungseinrichtung 7, welche Einrichtung in der Lage ist, zu erfassen, ob sich die Ursache, weswegen das Kraftfahrzeug 1 gehalten hat und der Motor 2 ausgeschaltet wurde, in absehbarer Zeit ändern wird respektive geändert hat, so dass in allernächster Zeit mit dem Wiederanlassen des Motors 2 über den Anlasser 4 respektive der Gabe eines Einschaltsignals über das Fahrpedal 5 zu rechnen ist. Wird eine solche anstehende oder bereits erfolgte Ursachenänderung seitens der Einrichtung 6 erkannt, so wird ein Informationssignal auf wenigstens einen Fahrzeugbus 8 gelegt, an welchem Fahrzeugbus 8 eine Vielzahl weiterer Elektronikeinheiten 9 beliebigen Typs hängen, wie letztlich auch das Motorsteuergerät 3. Über diese Information, die anzeigt, dass in Kürze mit der Gabe eines Einschaltsignals zu rechnen ist, werden die Elektronikeinheiten 9 gleich welcher Art über den mit dem Wiederstart verbundenen kurzzeitigen Spannungseinbruch im Fahrzeugbordnetz informiert und können entsprechende Maßnahmen ergreifen, sei es, dass Teile des Bordnetzes respektive der Elektronikeinheit spannungsgestützt werden, sei es, dass diese in entsprechende Funktionsmodi wechseln, in denen ein Spannungseinbruch nicht als Fehler oder als kritisch erkannt wird, etc. Hierüber wird sichergestellt, dass auf alle betroffenen Elektronikeinheiten dann, wenn tatsächlich das Einschaltsignal gegeben respektive der Motor wieder gestartet wird, ein etwaiger Spannungseinbruch keine Auswirkungen hat, und dass der Wiederstart sofort mit der Gabe des Einschaltsignals erfolgen kann, ohne eine gewisse Verzögerungszeit einzuhalten bis zum Wiederstart, innerhalb welcher - wie bisher im Stand der Technik bekannt - erst die Information der Elektronikeinheiten und deren "Vorbereitung" auf den anstehenden Spannungsabfall erfolgt.

Die Einrichtung 6 weist im gezeigten Ausführungsbeispiel zwei hier kumulativ vorgesehene Möglichkeiten zur Situationserfassung auf, wobei aber auch die Möglichkeit besteht, nur eine dieser Möglichkeiten vorzusehen. Zum einen umfasst die Einrichtung 6 eine Funkeinrichtung 10 beispielsweise in Form eines einfachen Signalsempfängers. Dieser ist in der Lage, die von einer weiteren Funkeinrichtung 11, im Beispiel eines einfachen Senders, die im gezeigten Beispiel an einer Verkehrsregelungseinrichtung 12, hier einer Ampel 13, angeordnet ist, gesendeten Signalinformationen zu empfangen. Über die Funkeinrichtung 11 wird ein Signal gesendet, das anzeigt, dass ein Lichtzeichenwechsel beispielsweise von rot nach gelb unmittelbar bevorsteht, oder gerade erfolgt. Die Funkeinrichtung 10 empfängt dieses Signal, die Steuerungseinrichtung 7 ermittelt hieraus unmittelbar, dass sich die Ursache, weswegen das Kraftfahrzeug 1 gehalten hat (nämlich Rotlicht der Ampel 13) ändert und gibt ein entsprechende Information, die den in Kürze erfolgenden Wiederstart respektive die Gabe des in Kürze zu erwartenden Einschaltsignals anzeigt, auf den Fahrzeugbus 8. Diese Information wird nun an sämtliche eingebundene Elektronikeinheiten verteilt und dortseits erfasst und entsprechend verarbeitet. Zeitgleich mit der Gabe dieser Wiederanfahrt-Information oder dieser Einschaltsignal-Information seitens der Steuerungseinrichtung 7 wird auch eine Fahrerinformation über die Ursachenänderung beispielsweise über ein Display 14 oder ein Sprachinformationssystem 15 ausgegeben.

Fig. 1 zeigt eine weitere alternative Erfassungsmöglichkeit für eine Ursachenänderung in Form einer Bildaufnahmeeinrichtung 16, üblicherweise eine einfache Kamera (z. B. CCD-Kamera) gezeigt. Diese nimmt kontinuierlich das Fahrzeugvorfeld auf. Steht das Fahrzeug beispielsweise an einer Ampel, so ist üblicherweise die Ampel 13 in den aufgenommenen Bildern abgebildet. Die Steuerungseinrichtung 7 ist nun in der Lage, über geeignete Analysealgorithmen die aufgenommenen Kamerabilder dahingehend auszuwerten, welches Lichtzeichen gerade gegeben wird, ob also Rotlicht leuchtet und die Stopp-Ursache nach wie vor gegeben ist, oder ob die Lichtanzeige auf gelb wechselt, mithin also die Stopp-Ursache sich ändert. Wird dieser Farbwechsel erfasst, so gibt die Steuerungseinrichtung 7 ebenfalls umgehend die entsprechende Information auf den Fahrzeugbus 8, dass in Kürze mit einer Wiederanfahrt zu rechnen ist respektive das Einschaltsignal gegeben wird. Wiederum erfolgt eine Ausgabe einer Fahrerinformation am Display 14 und/oder dem Sprachinformationssystem 15.

Die Steuerungseinrichtung 7 ist weiterhin dazu ausgebildet, einer auf den Fahrerbus gelegten Wiederanfahrt- oder Einschaltsignal-Information eine Gültigkeitsdauerinformation beizuordnen, mithin also einen Zeitstempel aufzuprägen, worüber angegeben wird, wie lange die gegebene Wiederanfahr-Information Gültigkeit hat, woraus sämtliche eingebundenen Elektronikeinheiten 9 erkennen, wie lange sie beispielsweise in dem Modus, in dem entsprechende Spannungseinbrüche nicht berücksichtigt oder anderweitig kompensiert werden, verbleiben sollen, sofern kein Einschaltsignal gegeben wird. Sie kehren automatisch in den normalen Betriebsmodus zurück, wenn kein Motorstart innerhalb der vorbestimmten Gültigkeitsdauer erfolgt. Alternativ ist es auch denkbar, dass die Steuerungseinrichtung 7 nach Ablauf einer vorbestimmten Zeit der Informationsgültigkeit eine weitere Information an den Fahrzeugbus 8 legt, die die zuvor gegebene Wiederstart- oder Einschaltsignalgabe-Information aufhebt, woraufhin die Elektronikeinheit 9 wieder in den normalen Betriebsmodus zurückkehren.

An dieser Stelle sei noch festgehalten, dass über die Bildaufnahmeeinrichtung 16 in Verbindung mit der Auswertung der Bilder über die Steuerungseinrichtung 7 nicht nur Lichtzeichenanlagen respektive ein Lichtzeichenwechsel erkannt werden kann, sondern auch beispielsweise das Anfahren eines unmittelbar vor dem eigenen Kraftfahrzeug 1 befindlichen anderen Fahrzeugs innerhalb einer sich beispielsweise vor einer Ampel gebildeten Kolonne. Denn über die Bildauswertung kann auch eine solche Situationsänderung ohne Weiteres erfasst und als Grundlage für die Informationsgabe über die Steuerungseinrichtung 7 erkannt werden.

Fig. 2 zeigt schließlich eine Art der Einbindung der Einrichtung 6 in eine mehrere Einzelbusse 8a, 8b, 8c, 8d umfassende Systemarchitektur. Die Einrichtung 6 kommuniziert beispielsweise mit dem Fahrzeugbus 8a. Dieser wiederum ist mit einem Gateway 17 verbunden, an dem auch die weiteren Fahrzeugbusse 8b und 8c sowie der zum Motorsteuergerät 3 führende Fahrzeugbus 8d, an dem auch weitere, hier nur über die Punkte dargestellte Subsysteme 18 hängen, angeschlossen sind. Eine auf den Fahrzeugbus 8a über die Steuerungseinrichtung 7 gegebene Information wird über das Gateway 17 auf alle anderen Fahrzeugbusse 8b, 8c und 8d verteilt, so dass sämtliche angeschlossenen Elektronikkomponenten beliebiger Art, die diese Information benötigen, sie empfangen.

Wird also seitens der Einrichtung 6 respektive der Steuerungseinrichtung 7 eine Situationsänderung erfasst, die einen Wiederstart erwarten lässt, so sendet die Steuerungseinrichtung 7 die Wiederstart- oder Einschaltsignalgabe-Information über den Bus 8c an das Gateway 17 und über dieses an sämtliche weiteren Fahrzeugbusse 8b, 8c und 8d. Wird dann nach einer bestimmten Zeit vom Fahrer das Einschaltsignal beispielsweise über das Fahrpedal 5 gegeben, so kann der Motor 2 unmittelbar über den Anlasser 4 gestartet werden, ohne dass hierfür nochmals eine Verzögerungszeit vorzusehen wäre, nachdem sämtliche eingebundenen Elektronikkomponenten über den damit verbundenen Spannungsabfall bereits "informiert" sind. Erfolgt kein Motorstart, so wird nach Ablauf einer vorbestimmten Gültigkeitszeit der gegebenen Information oder nach Gabe einer weiteren, die erste Information aufhebenden Information seitens der Steuerungseinrichtung 7 die Wiederstart- oder Einschaltsignalgabeinformation wieder zurückgenommen.

## Patentansprüche

1. Kraftfahrzeug umfassend einen Motor und einen diesen startenden Anlasser zur Realisierung eines Start-Stopp-Betriebs, wobei der Anlasser den ausgeschalteten Motor nach Gabe eines Einschaltsignals durch den Fahrer anlässt,
**dadurch gekennzeichnet,**
**dass** eine Einrichtung (6) zur Erfassung einer anstehenden oder erfolgten Änderung der Ursache für den Stopp des Kraftfahrzeugs (1) vorgesehen ist, die zur Gabe einer das in Kürze zu erwartende Einschaltsignal anzeigenden Information auf wenigstens einen Fahrzeugbus (8, 8a, 8b, 8c, 8d) zur Verteilung an weitere fahrzeugseitig vorgesehene Elektronikeinheiten (9, 18), insbesondere Steuergeräte, ausgebildet ist.

2. Kraftfahrzeug nach Anspruch 1,
**dadurch gekennzeichnet,**
**dass** die Einrichtung (6) nach Ablauf einer vorbestimmten Zeit ohne Gabe des Einschaltsignals zur Erzeugung einer die Information zurücknehmenden weiteren Information und zur Gabe auf den Fahrzeugbus(8, 8a, 8b, 8c, 8d), oder zur Zuordnung einer Gültigkeitsdauerinformation zur Information im Rahmen deren Erzeugung ausgebildet ist.

3. Kraftfahrzeug nach Anspruch 1 oder 2,
**dadurch gekennzeichnet,**
**dass** die Einrichtung (6) zur Erzeugung und mit der Informationsausgabe zeitgleichen Ausgabe einer die anstehende oder erfolgte Änderung der Stopp-Ursache anzeigenden Fahrerinformation ausgebildet ist.

4. Kraftfahrzeug nach einem der vorangehenden Ansprüche,
**dadurch gekennzeichnet,**
**dass** die Einrichtung () zur Erfassung der Stopp-Ursache eine Funkeinrichtung (10) zur Aufnahme drahtlos von einer einer Verkehrsregelungseinrichtung (12) zugeordneten Funkeinrichtung (11) übertragener Signalinformationen umfasst.

5. Kraftfahrzeug nach einem der vorangehenden Ansprüche,
**dadurch gekennzeichnet,**
**dass** die Einrichtung (6) zur Erfassung der Stopp-Ursache eine Bildaufnahmeeinrichtung (16) umfasst.
